# EUROPEAN PATENT APPLICATION

(11) **EP 4 372 647 A1**
(43) Date of publication of application: **22.05.2024**
(21) Application number: 22208525.0
(22) Date of filing: 21.11.2022
(51) Int. Cl.: G06Q 10/08, G06Q 10/00, G06Q 10/083, G06Q 10/0833, G06Q 10/0836, H04L 67/125, H04W 4/021

(54) **A METHOD FOR CONTROLLING LIGHT EMITTING DEVICES ASSOCIATED WITH PACKAGES, AND A COMPUTER SYSTEM THEREOF**

(71) Applicant: VOLVO TRUCK CORPORATION, 405 08 Göteborg (SE)
(72) Inventor: CHAVRIER, Philemon, 69008 Lyon (FR); LAPERRIERE, Renaud, 69006 Lyon (FR)
(74) Representative: Zacco Sweden AB

(57) **Abstract**

A computer-implemented method (500) for controlling light emitting devices (106) by using a computer system (118) is provided. The light emitting devices (106) are associated with packages (104) provided in a cargo space (102) of a vehicle (100). Each of the light emitting devices (106) is configured to be in an activated mode (ACT) or a de-activated mode (DE-ACT). The method (500) comprises receiving (502) delivery positions (126a-f) for the packages (104), receiving (504) a vehicle halt position (200), identifying (506) a set of packages (104) having delivery positions (126a-f) within a delivery area (204a, 204b) comprising the vehicle halt position (200), and transmitting (508) control data (125a,b) to a set of light emitting devices (106) associated with the set of packages (104), such that the set of light emitting devices are set in the activated mode (ACT).

## Description

### TECHNICAL FIELD

The disclosure relates generally to package delivery services. In particular aspects, the disclosure relates to a method for controlling light emitting devices associated with packages, and a computer system thereof. The disclosure can be applied in transport vehicles, such as trucks. Although the disclosure may be described with respect to a particular vehicle, the disclosure is not restricted to any particular vehicle.

### BACKGROUND

Package delivery services have been growing steadily over the last couple of years. One reason for this is that e-commerce has been growing and as an effect products are shipped home to customers or to a pick-up point chosen by the customer. By having different packages provided with unique identification, such as QR codes or barcodes, the operation of the package delivery services can be made very efficient. Logistics hubs, sometimes also referred to as logistics centers, of today are largely automatically operated and most sorting is today made by machines.

Even though delivery services of today are efficient, there is still room for improvement. One part of the chain of operations that is at risk to not meet expectations is when packages are transported from the logistics hub to delivery positions, which may be post boxes, pick-up stations, houses or offices. Today it is common that this part is handled by a delivery company having one or several trucks. Once the packages are received by one of the trucks, these are loaded into a cargo space. Usually the loading is performed by a driver and different drivers may have different preferences on how the cargo space should be organized, but by having the driver loading it will be easier for him or her to find the packages at a later point of time. Since all drivers are not well-organized, there is a risk, if not having any system assisting the drivers, that the cargo space is loaded in a non-optimal way, in turn resulting in that packages are later difficult to find for the driver.

In addition to the risk of non-optimal organization of the cargo space and the time loss that may be the result of this, conditions may change between a point of time when the loading of the cargo space is made and a later point of time when one or a few of the packages are to be unloaded, i.e. identified in the cargo space and picked by the driver. For instance, due to traffic congestion, the driver may need to take a different route than planned with the result that packages are to be unloaded in a different order than anticipated at the point of time when loading the cargo space.

As presented above, there is a need to further facilitate for the driver such that the packages can be identified more easily such that less time is needed for transporting the packages from the logistics hub, or other site where the package are picked up, to the delivery positions associated with the different packages.

### SUMMARY

According to a first aspect of the disclosure, a computer-implemented method for controlling light emitting devices by using a computer system is provided. The computer system may comprise a processor device. The light emitting devices may be associated with packages provided in a cargo space of a vehicle. Each of the light emitting devices may be configured to be in an activated mode or a de-activated mode. The method may comprise receiving delivery positions for the packages, receiving a vehicle halt position, identifying a set of packages having delivery positions within a delivery area comprising the vehicle halt position, and transmitting control data to a set of light emitting devices associated with the set of packages, such that the set of light emitting devices are set in the activated mode. The first aspect of the disclosure may seek to facilitate for a driver of the vehicle, or other person assigned to identify the package or packages to be unloaded at the vehicle halt position. A technical benefit may include that the vehicle position is taken into account when determining which of the light transmitting devices to be activated. By taking into account the vehicle halt position, a more flexible and versatile light-based system for identifying packages to be unloaded can be provided. Using such system comes with the advantage that in case a planned route cannot be followed, the identification of packages by using the light emitting devices can dynamically adapt. The light emitting devices may be any type of device suitable for providing light indications to a driver of the vehicle. By way of example, the light emitting devices may be devices comprising light emitting diodes (LEDs). The light emitting devices and the computer system may be arranged for wireless data communication such that the control data can be transmitted wireless. Another option is to use wired data communication or a combination of wireless and wired data communication.

In some examples, the method may further comprise, based on the delivery positions for the packages, determining a cluster of delivery positions, identifying a vehicle halt area based on the cluster, providing directions to a driver of the vehicle to the vehicle halt area, and determining the vehicle halt position once the vehicle is halted within the vehicle halt area. The vehicle halt position may be determined by a positioning device provided in the computer system. For instance, the positioning device, e.g. a GPS device, may be placed in the vehicle or it may be provided in a nomadic device, e.g. a mobile phone, provided with GPS functionality carried by the driver of the vehicle. In other words, the vehicle halt position may be directly linked to the vehicle or it may be directly linked to the driver of the vehicle. The positioning device of the vehicle and the nomadic device may be used separately to determine the vehicle halt position or they may be used in combination. In the latter case, if used in combination, a failure of one of the devices could be compensated for by the other.

An advantage with determining the cluster and directing the driver to the vehicle halt area, which may be placed such that at least a sub-set of the delivery positions of the cluster can be reached by the driver after the vehicle has been parked, is that the vehicle in this way can be halted, or parked, in the vicinity of the delivery positions. This, in combination with that the activation of the light emitting devices can be made based on the vehicle halt position, provides for that the packages can be efficiently transported from a logistics centre, i.e. a starting position of the vehicle, to the delivery positions.

In some examples, the method may further comprise identifying a loading zone within the vehicle halt area, and providing directions to the driver to the loading zone. An advantage with this is that the driver is not only directed to an area in which at least a sub-set of delivery positions can be reached, but also to the loading zone in this area. The loading zone may be a zone in which parking for unloading is allowed, but it may also be a zone set to be suitable for unloading, which may be relevant in case there are no designated loading zones.

In some examples, the delivery area may be user adjustable. An advantage with having the delivery area user adjustable, e.g. by allowing the driver to specify a maximum carrying distance between the vehicle halt position and the delivery positions, is that the driver may customize such that this meet his or her individual preferences.

In some examples, the step of identifying the set of packages may comprise dynamically determine the delivery area by taking into account an expected carrying distance from the vehicle halt position to the delivery positions. By using the expected carrying distance, e.g. the expected walking distance between the vehicle halt position and the delivery positions, the surroundings, such as where buildings are placed, can be taken into account. In case the driver of the vehicle has access to a personal transporter, such as e-scooter (scooter with electric motor), the expected carrying distance can be an expected scooter transported distance, that is, the expected distance between the vehicle halt position and the delivery positions when the driver together with the packages to be delivered to the delivery positions is using the e-scooter for transportation. The expected walking distance may be the same as the expected scooter transported distance, but in case there are paths, e.g. sidewalks, where e-scooters are not permitted, the two may differ. As an effect, the choice of transportation means from the vehicle halt position to the delivery positions may result in that the delivery area may depend on the transportation means. The choice of transportation means may be made by the driver by using a user interface on the nomadic device or a user interface provided in the vehicle.

In some examples, the step of dynamically determining the delivery area may further comprise taking into account weights and/or sizes of the set of packages. An advantage with taking into account the weights and/or sizes of the packages when determining the delivery area is, by way of example, that the delivery area may be determined based on expected carrying work, that is, expected distance times weight of the packages. By way of example, by taking into account the weights and/or sizes, the delivery area can be made smaller in case there are several heavy packages to be delivered compared to a situation in which there is only light packages to be delivered. In other words, by way of example, the delivery area may be determined by multiplying, for each of the packages, the weight of the package with the expected carrying distance to the delivery position of the package from the vehicle halt position. In a similar manner, also by way of example, the delivery area may also be determined by taking into account the volume of the different packages by, for each of the packages, multiplying the volume of the package with the expected carrying distance to the delivery position of the package from the vehicle halt position. It is also possible to use the weight and volume in combination, for instance, by, for each of packages, multiplying the weight, the volume and the expected carrying distance to the delivery position of the package from the vehicle halt position.

In some examples, the set of packages may be divided into a first and a second sub-set. The packages of the first sub-set may have first delivery positions within a first sub-area of the delivery area and the packages of the second sub-set may have second delivery positions within a second sub-area of the delivery area. The step of identifying may comprise identifying the first and second sub-set of packages. The step of transmitting the control data may comprise transmitting first control data to a first set of light emitting devices of the first sub-set of packages and transmitting second control data to a second set of light emitting devices of the second sub-set of packages. An advantage with dividing the set of packages into the first and second sub-set is that for one stop, or halt, two delivery rounds can be provided.

In some examples, a plurality of packages, having identical delivery positions or delivery positions within a sub-cluster of the cluster, may be associated to one and the same light emitting device. An advantage of this is a number of light emitting devices can be reduced, thereby providing a more cost efficient solution.

In some examples, the delivery positions of the packages may be received from a remote server, placed outside the vehicle, and the vehicle halt position may be received from the vehicle. By having the delivery positions received from the remote server, the delivery positions may be easily changed up until the very moment the packages are to be unloaded from the vehicle placed in the vehicle halt position. Having the possibility to change up until this point of time reduces the risk that packages are delivered to the wrong address.

In some examples, the method may further comprise receiving, from a nomadic device, a number of confirmations that the set of packages have been retrieved from the cargo space of the vehicle. The confirmation may be made by scanning a code on the package by using a camera of the nomadic device. In addition to knowing that the package is picked by the driver from the cargo space, the confirmation may also result in, in case several packages are related to one and the same delivery point, that the light emitting devices linked to the remaining packages not yet picked changes to a different light settings.

In some examples, the method may further comprise transmitting final distance directions from a vehicle control unit or the remote server to the nomadic device, wherein the final distance directions may comprise information on how to reach the delivery positions linked to the set of packages from the vehicle halt position. The combination of first determining which packages to pick from the cargo space based on the vehicle halt position, and then once the packages are picked provide the final instructions to the driver via the nomadic device, such as a mobile phone, provides for a seamless and efficient delivery system.

In some examples, the computer system may comprise the vehicle control unit, the remote server and the nomadic device.

In some examples, the activated mode may comprise the sub-modes: activated and one single package sub-mode and activated and a plurality of packages sub-mode. The control data may comprise information to set the light emitting devices in the activated and one single package sub-mode or the activated and a plurality of packages sub-mode. The activated and one single package sub-mode may pertain to first light settings and the plurality of packages sub-mode may pertain to second light settings, thereby indicating whether one single package or several packages are to be picked from the cargo space. An advantage with having two different light settings, or more than two different light settings, is that the driver, or other person unloading, may easily spot if there is one or several packages to be picked.

According to a second aspect, it is provided a computer system comprising a processor device configured to perform the method of the first aspect.

According to a third aspect, it is provided a vehicle comprising a processor device to perform the method according to the first aspect.

According to a fourth aspect, it is provided a computer program product comprising program code for performing, when executed by the processor device, the method according to the first aspect.

According to a fifth aspect, it is provided a non-transitory computer-readable storage medium comprising instructions, which when executed by the processor device, cause the processor device to perform the method according to the first aspect.

According to a sixth aspect, it is provided a computer-implemented method for organizing a cargo space of a vehicle by assigning a light emitting device to a package by using a computer system. The method may comprise reading a code provided on the package, retrieving a delivery position linked to the package, identifying the light emitting device associated with the delivery position, transmitting control data to the light emitting device, such that the light emitting device is set in an activated mode, thereby allowing the light emitting device to be identified such that the package can be physically connected to the light emitting device. An advantage with this approach is that the organizing of the cargo space is facilitated and as an effect linking the light emitting devices to the packages can be made more efficient and also more reliable, thereby saving time and reducing the risk of mistakes. This especially holds true if there are several packages to be delivered to the same delivery position.

In some examples, reading the code may be performed by using the nomadic device, and the delivery position may be retrieved from a remote server. An advantage of having the delivery position retrieved from the remote server is that a risk of missing out changes made regarding the delivery position for one or several of the packages can be reduced.

In some examples, the light emitting device may be mounted on a shelf in the cargo space such that the package can be physically connected to the light emitting device by placing the package on the shelf, wherein the shelf may be arranged to hold a plurality of packages having identical delivery positions or delivery positions within a sub-cluster of the cluster. An advantage with having a shelf arranged to hold several packages is that the packages easily can be physically connected to the light emitting device by placing the packages on the shelves. In addition to using shelves, bags, nets, bins or the like can be used for serving the same purpose.

In some examples, the activated mode may comprise the sub-modes: activated and one single package sub-mode and activated and a plurality of packages sub-mode. The control data may comprise information to set the light emitting devices in the activated and one single package sub-mode or the activated and a plurality of packages sub-mode. The activated and one single package sub-mode may pertain to first light settings and the plurality of packages sub-mode may pertain to second light settings, thereby indicating whether the package is to be a single package physically connected to the light emitting device or to be one out several packages physically connected to the light emitting device.

According to a seventh aspect, it is provided a computer system comprising a processor device configured to perform the method of the sixth aspect.

According to an eighth aspect, it is provided a vehicle comprising a processor device to perform the method of the sixth aspect.

According to a ninth aspect, it is provided a computer program product comprising program code for performing, when executed by the processor device, the method of the sixth aspect.

According to a tenth aspect, it is provided a non-transitory computer-readable storage medium comprising instructions, which when executed by the processor device, cause the processor device to perform the method of the sixth aspect.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
**FIG. 1** illustrates an example of a vehicle provided with light emitting devices in a cargo space.
**FIG. 2** illustrates an example of how a delivery area may relate to a vehicle halt position.
**FIG. 3** illustrates another example of how the delivery area may related to the vehicle halt position, and also how final distance directions may be related to delivery positions.
**FIG. 4** illustrates a detailed example of the cargo space of the vehicle.
**FIG. 5** is a flow chart of a method for controlling the light emitting devices such that identification of packages to be picked can be facilitated.
**FIG. 6** is a flow chart of a method for organizing the cargo space by assigning the light emitting devices to the packages.
**FIG. 7** is a schematic diagram of a computer system for implementing examples disclosed herein.

### DETAILED DESCRIPTION

Aspects set forth below represent the necessary information to enable those skilled in the art to practice the disclosure.

By having light emitting devices linked to packages, it is made possible for a driver, or other person involved in the delivery, to easily identify packages to be picked from a cargo space such that more efficient transportation from a vehicle halt position to delivery positions can be provided. Put differently, by activating light emitting devices attached to the packages directly or indirectly, e.g. by having the light emitting devices placed on shelves on which the packages are placed, less time will have to be spent by the driver to identify the packages to be picked. The risk of picking the wrong package or forgetting one of the packages to be picked can also be reduced.

Unlike light emitting device based systems used for identifying items in a warehouse or the like, the approach suggested herein propose to use the vehicle halt position to determine a delivery area. Once this area is determined, the packages having delivery positions within this area can be identified. Thereafter, once the packages are identified, the light emitting devices linked to these packages can be identified. Having the delivery area being dependent on the vehicle halt position comes with the advantage that in situations when loading zones are scarce, or it is in other ways not possible to foresee in detail where the driver will find a place for parking the vehicle, light indications provided for identification of the packages to be picked can be dynamically adapted. Put differently, the approach suggested herein propose that the light indications can take into account where the vehicle is actually stopped to both provide the flexibility to allow the driver to park where he or she can find a suitable place, and still provide efficient identification of packages to be picked by indicating these packages by the light emitting devices.

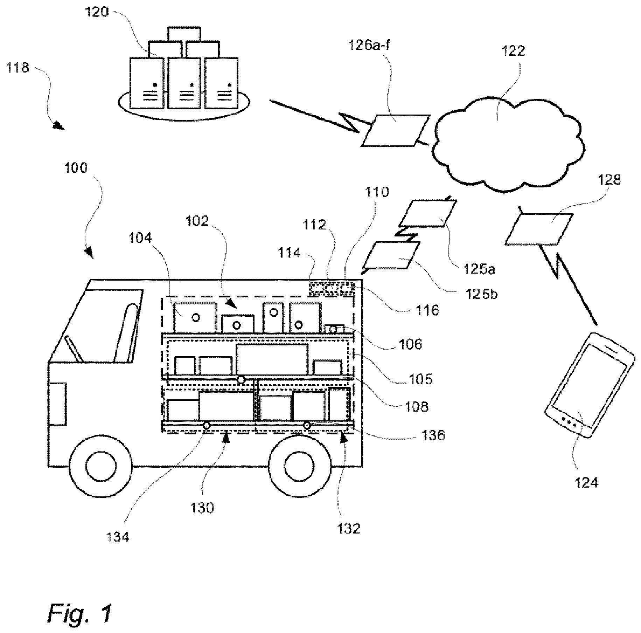

**FIG. 1** illustrates generally, by way of example, a vehicle 100 having a cargo space 102 housing packages 104. As illustrated, the packages 104 may be individually linked to a light emitting device 106 or a plurality of packages 105 may be linked to one and the same light emitting device 106. One reason for having the plurality of packages 105 linked to the same light emitting device 106 may be that all of the packages of the plurality of packages 105 are to be delivered to the same delivery position, e.g. the same address or the same pick-up box. The light emitting devices 106 may directly linked to the packages 104 or the light emitting devices 106 may indirectly linked to the packages 104. One way of indirectly linking the light emitting devices 106 to the packages 104 is to have the light emitting devices 106 attached to a shelf 108. Another example, even though not illustrated, is to have a net or a bag provided with the light emitting device 106 such that the package 104, or the plurality of packages 105, can be linked to the light emitting device 106 by placing the package 104 in the net or bag. The light emitting devices 106 may be portable. In other words, by way of example, the light emitting devices 106 may be movable from one shelf to another, or from one bag to another. In this way, it is made possible for the driver to customize the cargo space for a specific delivery round. For instance, the packages to be delivered to a specific delivery position may be packed in one bag, and once packed into the bag, one of the light emitting devices 106 may be attached to the bag. By having the light emitting devices 160 movable it is also possible to remove the light emitting devices 106 used the previous delivery round, thereby reducing the number of light emitting devices, which can provide for that less time is needed for the driver to identify the packages in the cargo space compared when light emitting devices are not removed when not used, which is the case when the light emitting devices are fixedly mounted on the shelves 108.

The vehicle 100 may be provided with a vehicle control unit 110 comprising a processor device 112, a memory 114 and a data communications device 116. The vehicle control unit 110 may in itself control the light emitting devices 106, that is, the vehicle control unit 110 may be configured to receive the vehicle halt position and the delivery positions and determine and transmit control data to the light emitting devices 106 to be activated for a particular vehicle stop. The vehicle control unit 110 may also control the light emitting devices 106 in combination with other devices, herein generally referred to as a computer system 118. This system 118 may, as illustrated, comprise a remote server 120 arranged to communicate with the vehicle 100, more particularly the vehicle control unit 110, via a data communications network 122. The system 118 may also comprise a nomadic device 124, e.g. a mobile phone. The nomadic device 124 may be used for reading package identification tags of the packages 104 to confirm that these have been picked. In addition, this may be used for determining the vehicle halt position in case the vehicle 100 is not equipped to do so, or for any reason is temporarily not able to provide such information. Still further, the nomadic device 124 may act as a gateway between the vehicle control unit 110 and the remote server 120 such that for instance near field communication protocols can be used for providing communication between the vehicle control unit 110 and the nomadic device 124. Thus, the example illustrated in **FIG. 1** is to be seen as one out of many possible setups.

As illustrated by way of example, control data 125a, 125b can be provided to the vehicle 100 via the data communications network 122. The control data 125a, 125b may be transmitted to the light emitting devices 106 such that these are activated, that is, emitting light such that the packages linked to these light emitting devices can be identified. The control data 125a. 125b can be used in different ways. For instance, the control data 125a, 125b may be transmitted only to the light emitting devices 106 identified to be linked to the packages 104 having delivery positions 126a-f within the delivery area. Another option is to have the control data 125a,125b broadcasted to all light emitting devices 106 and to have identification data included in the control data 125a, 125b such that each light emitting device 106 can determine whether or not it is to be activated or not.

As illustrated, the delivery positions 126a-f may be provided by the remote server 120. Put differently, the delivery positions 126a-f may be held in a central location and not in the vehicle 100. An advantage with having the delivery positions 126a-f held centrally is, by way of example, in case the delivery positions 126a-f are changed at a late stage, e.g. after the packages 104 has been loaded into the vehicle 100 and the vehicle 100 has left the logistics center for delivering the packages 104, that this information can still be taken into account such that the packages 104 for which the delivery positions 126a-f are changed can be delivered to a new delivery position or be returned to the logistics center. Confirmations 128 that the packages 104 has been identified and picked up may be provided by the nomadic device 124. One way of generating the confirmations 124 is to have codes on the packages 104 read by using the nomadic device 124 when these are picked from the cargo space 102.

The control data 125a, 125b may comprise first control data 125a and second control data 125b. The first control data 125a may be linked to a first set of light emitting devices 134 linked to a first set of packages 130 and the second control data 125b may be linked to a second set of light emitting devices 136 linked to a second set 132 of packages. By having different control data sets for different sets of light emitting devices and, as an effect, different sets of packages, it can be provided for that data is transmitted to fewer light emitting devices 106, which will reduce the amount of data traffic, thereby providing for an extended battery lifetime of the light emitting devices 106 in case these are battery powered.

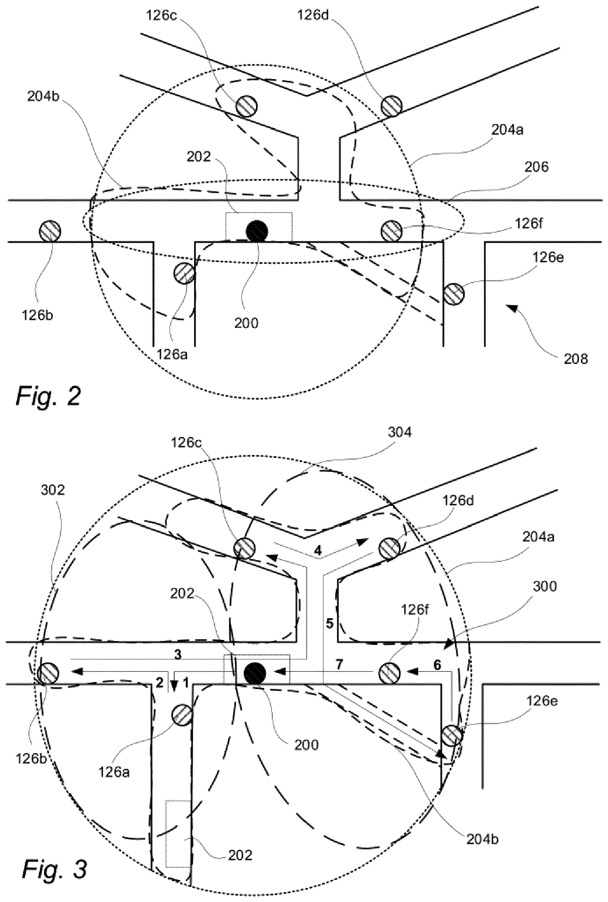

**FIG. 2** illustrates an example of how a delivery area 204a, 204b can be determined based on the vehicle halt position 200. As illustrated, the vehicle halt position 200, which may be inside a loading zone 202, may form a center of a circular delivery area 204a, illustrated by a dotted line. A radius of such delivery area may be determined by the driver of the vehicle 100, that is, the driver may for himself or herself determine how far away from the vehicle halt position 200 delivery positions 126a-f may be placed. This may be made by using a user interface of the vehicle 100 or a user interface of the nomadic device 124. The radius, or any other parameter used as a basis for determining the size of the delivery area 124a, 124b, may be made in an indirect manner as well. For instance, in case the driver has access to e.g. an electric personal transporter this information may be provided via the user interface and as a result the radius may be set greater than a radius used if the driver does not have access to such personal transporter. The radius may also be determined such that the delivery area 204a covers a minimum number of the delivery positions 126a-f.

According to another example, the delivery area 204b may be determined by taking into account the surroundings of the vehicle halt position 200. For instance, the delivery area 204b, illustrated by a dashed line, may be determined based on an expected carrying distance from the vehicle halt position 200. For instance, in case the driver can walk directly from the vehicle halt position 200 to the delivery positions 126a-f, the delivery area 204b will coincide with the delivery area 204a having the fixed radius, but in case the driver needs to make a detour, e.g. because of a house being placed between the vehicle halt position 200 and the delivery position 126a-f, this will imply that the delivery area 204b does not cover positions covered by the delivery area 204a having the fixed radius. Thus, an advantage of using a maximum expected carrying distance as a basis for generating the delivery area 204b is that more efficient last mile delivery can be achieved, i.e. more efficient delivery from the vehicle halt position to the delivery positions 126a-f. This approach may come especially advantageous in crowded city centers with many buildings.

In addition to the maximum expected carrying distance, weights and sizes of the packages 104 may also be taken into account when determining the delivery area 204a, 204b. For instance, instead of using the maximum expected carrying distance, it is possible to determine the delivery area 204b based on a maximum expected carrying work, that is, distance multiplied by weight. It should also be noted that several limits (carrying distance, carrying work, carrying volume, maximum radius from the vehicle halt position, etc) may be used in parallel.

To provide for that the vehicle halt position 200 is close to many of the delivery positions 126a-f, clusters 208 of the delivery positions 126a-f may be identified. Once having the clusters 208 identified, a vehicle halt area 206 may be identified. The vehicle halt area 206 may be in the center of the vehicle area 204a if using the fixed radius approach, but in case the surroundings, i.e. how roads, buildings etc are placed, are to be taken into account, the vehicle halt area 206 may be placed off center. When determining the vehicle halt area 206 it is also possible to take into account where the loading zones 202 are provided. In some city centers, it may e.g. only be allowed to park in the loading zones 202, and in such case the vehicle halt area 206 may be limited to one or a few loading zones 202. To provide for that the vehicle halt position 200 is close to several delivery points 126a-f, thereby allowing efficient package delivery, after the cluster 208 has been determined, or identified, directions may be provided to the driver to the vehicle halt area 206. In other words, efficient package delivery can be achieved by first directing the driver to the vehicle halt area 206, i.e. an area in which delivery points 126a-f could be reached, and thereafter, once the vehicle halt position 200 is known, use this position for determining which packages to pick and indicating these to the driver by the light emitting devices.

**FIG. 3** illustrates another example of the delivery area 124a with a fixed radius and also the delivery area 124b determined based on the maximum expected carrying distance, e.g. how far the driver may reach when walking 400 meters from the vehicle halt position. Compared to the example illustrated in **FIG. 2**, in the example illustrated in **FIG. 3**, the radius of the delivery area 124a is greater and also the maximum expected carrying distance is greater. As an effect, the two delivery points 126b,e not placed with the delivery area 124a, 124b in the example illustrated in **FIG. 2** are placed within the area in the example illustrated in **FIG. 3**. As discussed above, this may be because the driver has increased the radius to be used, i.e. accepting a larger distance between the vehicle halt position 200 and the delivery points 126a-f, or the maximum expected carrying distance may have been increased. It may also be due to that the driver has access to the personal transporter in the example illustrated in **FIG. 3**, but not in the example illustrated in **FIG. 2**. Still a reason may be that the packages to be delivered in the example illustrated in **FIG. 3** may be lighter and/or less bulky, i.e. smaller in terms of volume.

As illustrated in **FIG. 3**, final distance directions 300 may be provided to guide the driver, or other person transporting the packages 104 from the vehicle halt position 200 to the delivery positions 126a-f. The guiding may include an order in which the different delivery points 126a-f should be visited. As illustrated in **FIG. 3**, by way of example, once having parked the vehicle 100 in the vehicle halt position 200, the final distance directions 300 may be guide the driver to first visit a first delivery position 126a, thereafter a second delivery position 126b, and so forth. As illustrated, the final distance directions 300 may follow roads also accessible to the vehicle 100, but since there may be options available to the driver when walking, or using his or her personal transporter, the final distance directions 300 may also take this into account when guiding the driver. By way of example, as illustrated, the final distance directions 300 from a fourth delivery position 126d to a fifth delivery position 126e may guide the driver to use a pedestrian tunnel, illustrated in dashed lines, instead of the roads if this can e.g. reduce the distance.

In case the set of packages 104 to be delivered to the delivery positions 126a-f within the delivery area 124a-f weigh above a weight threshold and/or are above a volume threshold, several delivery rounds may take place. For instance, the first sub-set 130 of the packages may be delivered during a first round and the second sub-set 132 may be delivered during a second round. In this way, the driver will not have to carry all packages at the same time. In the example illustrated, the first sub-set 130 have first delivery positions 126a-b within a first sub-area 302 of the delivery area 204a-b and the packages of the second sub-set 132 have second delivery positions 126c-f within a second sub-area 304 of the delivery area 204a-b.

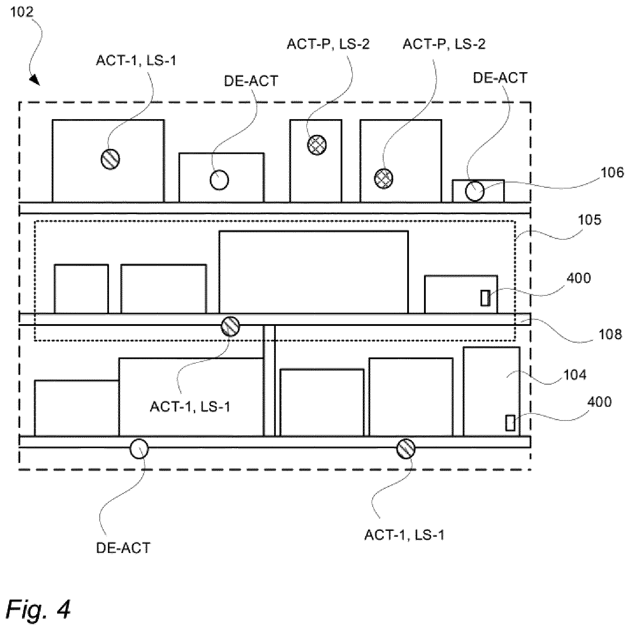

**FIG. 4** illustrates the cargo space 102 in more detail. As illustrated, the light emitting devices 106 may be either in an activated mode ACT or in a de-activated mode DE-ACT. In this context, the activated mode ACT may be considered as light emitting mode and de-activated mode DE-ACT may be considered as non-light emitting mode. Put differently, the light emitting devices 106 may be configured to receive control data 125a,b even though being in the de-activated mode DE-ACT. By having these two modes, it is made possible for the driver to identify the packages 104 to be picked for the vehicle halt position 200.

As illustrated, the activated mode ACT may comprise two sub-modes: activated and one single package sub-mode ACT-1 and activated and a plurality of packages sub-mode ACT-P. The activated and one single package sub-mode ACT-1 may pertain to first light settings LS-1 and the activated and plurality of packages sub-mode ACT-P may pertain to second light settings LS-2. In this way, in case one package is to be picked the activated and one single package sub-mode ACT-1 may be used. To indicate to the driver that there is only one package to pick, the first light settings LS-1 can be used. On the other hand, if there are several packages to be picked, this will be reflected in that the second light settings LS-2 are used. Using different light settings to indicate whether one or several packages should be picked may come particularly handy in case there are several packages placed in bags laying on top of each other or it is in any other way difficult to easily oversee the packages 104. Whether to be activated ACT or deactivated DE-ACT, and also in case the activated and one single package sub-mode ACT-1 or the activated and plurality of packages sub-mode ACT-P should be used, may be decided based on information provided to the light emitting devices 106 via the control data 125a, 125b.

The activated and one single package sub-mode ACT-1 may also be used for the plurality of packages 105, i.e. the plurality of package 105 may in this context be handled as one package. As illustrated, in case the plurality of packages 105 is placed on the shelf 108, the light emitting device 106 attached to the shelf 108 may be in the activated and one single package sub-mode ACT-1 if the packages 104 on the shelf 108 are to be picked.

The light emitting devices 106 may be fixedly arranged to the shelves 108, or corresponding arrangements, like bins, for holding packages, but it is also possible to have these releasably attached to the shelves 108 such that the cargo space 102 can be adapted to meet different needs.

As illustrated, the packages 104 may be provided with codes 400. The codes 400 may be QR codes, bar codes or any other codes suitable for identifying the packages 104. The codes 400 may come in handy when loading the cargo space 102. By reading the code 400 of the package 104 by using e.g. the nomadic device 124, the delivery position 126a-f linked to the package 104 may be identified, e.g. by uploading the code 400 to the remote server 120 and in response receive the identification position 126a-f. Once having the delivery position 126a-f, the light emitting device 106 associated with the delivery position 126a-f may be identified. In case there is already packages 104 to be delivered to the delivery position 126a-f associated with the package 104, which code 400 was read, the light emitting device 106 may already be associated with these packages 104. On the other hand, in case this is the only package 104 to be delivered to the delivery point 126a-f the light emitting device 106 may be a device not yet associated with any package. After the light emitting device 106 is identified, control data 125a, 125b can be transmitted to this device such that this can be set in the activated mode ACT, which may be a mode on its own or which may include the sub-modes ACT-1 and ACT-P discussed above. As an effect of that the light emitting device 106 is activated, the driver can identify the light emitting device 106 such that this can be attached, directly or indirectly, to the package 104. The ACT-1 sub-mode may be used in case there is no other packages 104 linked to the light emitting devices 105, and the ACT-P sub-mode may be used in case there are other packages 104 already linked to the light emitting devices 106. By receiving this information via the light emitting devices 106, the driver may organize the cargo space 102 such that the packages 104 can easily be identified when the vehicle 100 is halted. Organizing the cargo space 102 may include, by way of example, attaching the light emitting device 104 linked to a plurality of packages 105 to a large bag such that all packages 104 linked to this plurality of packages 105 can be fitted into the same bag.

The ACT-P sub-mode may be one and the same mode, but it may also be divided into several sub-modes. For instance, a specific mode may be used for the situation when two packages 104 are linked to the delivery position, another specific mode may be used for the situation when three packages 104 are linked to the delivery position, and so forth. These specific modes may all have their own light settings such that the driver may from the emitted light determine how many packages that are to be picked. Once one of the packages have been picked and the picking has been confirmed e.g. by the nomadic device 124, remaining light emitting devices may be changed to a light setting corresponding to a remaining number of packages linked to the delivery position.

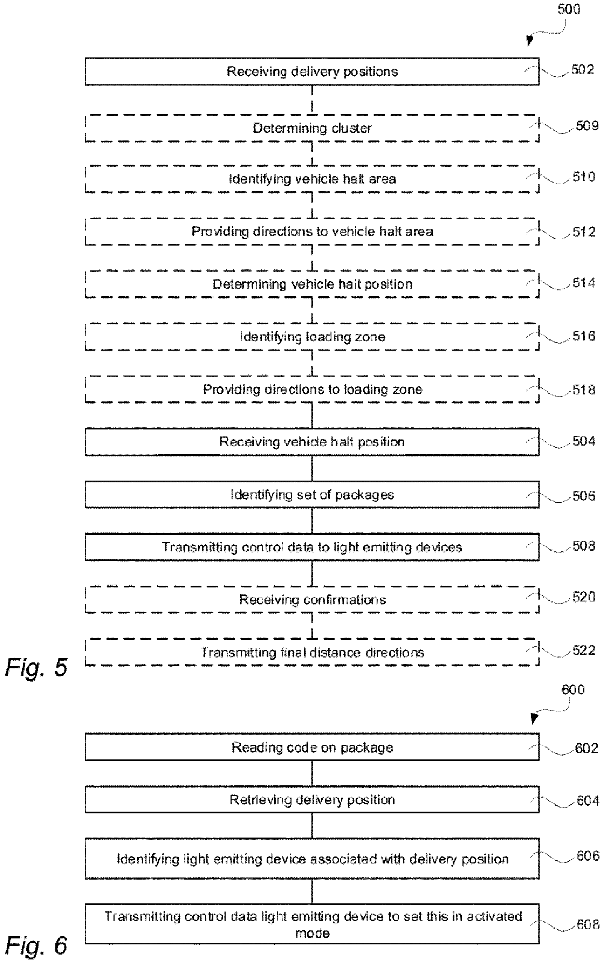

**FIG. 5** is a flow chart generally illustrating a method 500 for controlling the light emitting devices 106 by using the computer system 118 by way of example. In a step 502, the delivery positions 126a-f for the packages 104 can be received. In a step 504, the vehicle halt position 200 can be received. In a step 506, a set of packages 104 having the delivery positions 126a-f within the delivery area 204a,b comprising the vehicle halt position 200 can be identified. In a step 508, the control data 125a,b can be transmitted to a set of light emitting devices 106 associated with the set of packages 104 such that the set of light emitting devices can be set in the activated mode ACT.

Optionally, in a step 509, the cluster 208 of the delivery positions 126a-f can be determined based on the delivery positions 126a-f. In a step 510, the vehicle halt area 206 can be identified based on the cluster 208. In a step 512, directions to the driver of the vehicle 100 to the vehicle halt area 206 can be provided. In a step 514, once the vehicle 100 is halted within the vehicle halt area 206, the vehicle halt position 200 can be determined.

Optionally, in a step 516, the loading zone 202 within the vehicle halt area 206 can be identified, and in a step 518 directions to the loading zone 202 can be provided to the driver.

Optionally, in a step 520, the confirmations 128 that the packages 104 have been retrieved from the cargo space 102 may be received from the nomadic device 124.

Optionally, in a step 522, the final distance directions 300 may be transmitted from the vehicle control unit 118 or the remote server 120 to the nomadic device 124. The final distance directions 300 may comprise information on how to reach the delivery positions 126a-f linked to the set of packages 104 from the vehicle halt position 200.

**FIG. 6** is flow chart illustrating a method 600 for organizing the cargo space 102 of the vehicle 100. In a step 602, the code 400 provided on the package 104 can be read. In a step 604, the delivery position 126a-f linked to the package 104 can be retrieved. In a step 606, the light emitting device 106 associated with the delivery position 126a-f can be identified. In a step 608, the control data 125a,b can be transmitted to the light emitting device 106 such that this can be set in the activated mode ACT. As an effect of that the light emitting device 106 is set in the activated mode ACT, the light emitting device 106 can be identified by e.g. the driver, or other person loading the vehicle 100, which in turn can provide for that the package 104 can be physically connected, directly or indirectly, to the light emitting device 106.

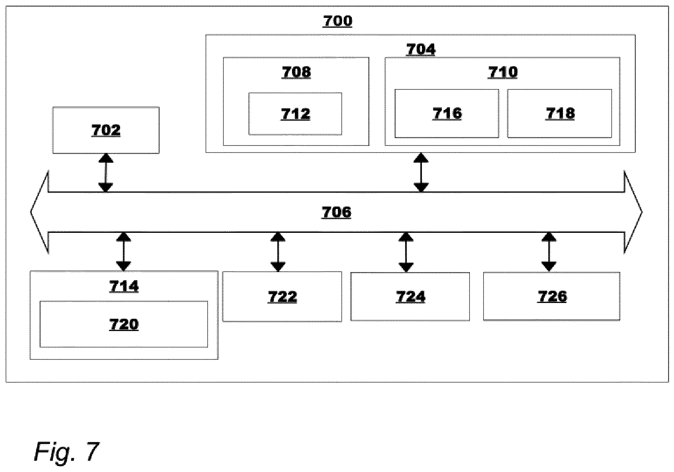

**FIG. 7** is a schematic diagram of a computer system 700 for implementing examples disclosed herein. The computer system 700 is adapted to execute instructions from a computer-readable medium to perform these and/or any of the functions or processing described herein. The computer system 700 may be connected (e.g., networked) to other machines in a LAN, an intranet, an extranet, or the Internet. While only a single device is illustrated, the computer system 700 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 700 may comprise at least one computing device or electronic device capable of including firmware, hardware, and/or executing software instructions to implement the functionality described herein. The computer system 700 may include a processor device 702 (may also be referred to as a control unit), a memory 704, and a system bus 706. The computer system 700 may include at least one computing device having the processor device 702. The system bus 706 provides an interface for system components including, but not limited to, the memory 704 and the processor device 702. The processor device 702 may include any number of hardware components for conducting data or signal processing or for executing computer code stored in memory 704. The processor device 702 (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus 706 may be any of several types of bus structures that may further interconnect to a memory bus (with or without a memory controller), a peripheral bus, and/or a local bus using any of a variety of bus architectures. The memory 704 may be one or more devices for storing data and/or computer code for completing or facilitating methods described herein. The memory 704 may include database components, object code components, script components, or other types of information structure for supporting the various activities herein. Any distributed or local memory device may be utilized with the systems and methods of this description. The memory 704 may be communicably connected to the processor device 702 (e.g., via a circuit or any other wired, wireless, or network connection) and may include computer code for executing one or more processes described herein. The memory 704 may include non-volatile memory 708 (e.g., read-only memory (ROM), erasable programmable read-only memory (EPROM), electrically erasable programmable read-only memory (EEPROM), etc.), and volatile memory 710 (e.g., random-access memory (RAM)), or any other medium which can be used to carry or store desired program code in the form of machine-executable instructions or data structures and which can be accessed by a computer or other machine with a processor device 702. A basic input/output system (BIOS) 712 may be stored in the non-volatile memory 708 and can include the basic routines that help to transfer information between elements within the computer system 700.

The computer system 700 may further include or be coupled to a non-transitory computer-readable storage medium such as the storage device 714, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 714 and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device 714 and/or in the volatile memory 710, which may include an operating system 716 and/or one or more program modules 718. All or a portion of the examples disclosed herein may be implemented as a computer program product 720 stored on a transitory or non-transitory computer-usable or computer-readable storage medium (e.g., single medium or multiple media), such as the storage device 714, which includes complex programming instructions (e.g., complex computer-readable program code) to cause the processor device 702 to carry out the steps described herein. Thus, the computer-readable program code can comprise software instructions for implementing the functionality of the examples described herein when executed by the processor device 702. The processor device 702 may serve as a controller or control system for the computer system 700 that is to implement the functionality described herein.

The computer system 700 also may include an input device interface 722 (e.g., input device interface and/or output device interface). The input device interface 722 may be configured to receive input and selections to be communicated to the computer system 700 when executing instructions, such as from a keyboard, mouse, touch-sensitive surface, etc. Such input devices may be connected to the processor device 702 through the input device interface 722 coupled to the system bus 706 but can be connected through other interfaces such as a parallel port, an Institute of Electrical and Electronic Engineers (IEEE) 1394 serial port, a Universal Serial Bus (USB) port, an IR interface, and the like. The computer system 700 may include an output device interface 724 configured to forward output, such as to a display, a video display unit (e.g., a liquid crystal display (LCD) or a cathode ray tube (CRT)). The computer system 700 may also include a communications interface 726 suitable for communicating with a network as appropriate or desired. Even though not illustrated, the computer system 700 may further comprise a GPS device or other device for determining positioning data, for instance, the vehicle halt position.

The operational steps described in any of the exemplary aspects herein are described to provide examples and discussion. The steps may be performed by hardware components, may be embodied in machine-executable instructions to cause a processor to perform the steps, or may be performed by a combination of hardware and software. Although a specific order of method steps may be shown or described, the order of the steps may differ. In addition, two or more steps may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, steps, operations, elements, and/or components, but do not preclude the presence or addition of one or more other features, integers, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A computer-implemented method (500) for controlling light emitting devices (106) by using a computer system (118) comprising a processor device (112), wherein the light emitting devices (106) are associated with packages (104) provided in a cargo space (102) of a vehicle (100), wherein each of the light emitting devices (106) is configured to be in an activated mode (ACT) or a de-activated mode (DE-ACT), said method (500) comprising
receiving (502) delivery positions (126a-f) for the packages (104),
receiving (504) a vehicle halt position (200),
identifying (506) a set of packages (104) having delivery positions (126a-f) within a delivery area (204a, 204b) comprising the vehicle halt position (200), and
transmitting (508) control data (125a,b) to a set of light emitting devices (106) associated with the set of packages (104), such that the set of light emitting devices are set in the activated mode (ACT).

2. The method according to claim 1, further comprising
based on the delivery positions (126a-f) for the packages (104), determining (509) a cluster (208) of delivery positions,
identifying (510) a vehicle halt area (206) based on the cluster (208),
providing (512) directions to a driver of the vehicle (100) to the vehicle halt area (206), and determining (514) the vehicle halt position (200) once the vehicle (100) is halted within the vehicle halt area (206).

3. The method according to claim 2, further comprising
identifying (516) a loading zone (202) within the vehicle halt area (206), and
providing (518) directions to the driver to the loading zone (202).

4. The method according to any one of the preceding claims, wherein the step of identifying (506) the set of packages (104) comprising dynamically determining the delivery area (204b)by taking into account an expected carrying distance from the vehicle halt position (200) to the delivery positions (126a-f).

5. The method according to claim 4, wherein the step of dynamically determining the delivery area further comprises taking into account weights and/or sizes of the set of packages (104).

6. The method according to any one of the preceding claims, wherein a plurality of packages (105), having identical delivery positions or delivery positions within a sub-cluster of the cluster (208), are associated to one and the same light emitting device.

7. The method according to any one of the preceding claims, further comprising transmitting (522) final distance directions (300) from a vehicle control unit (118) or the remote server (120) to the nomadic device (124), wherein the final distance directions (300) comprises information on how to reach the delivery positions (126a-f) linked to the set of packages (104) from the vehicle halt position (200).

8. The method according to any one of the preceding claims, wherein the activated mode (ACT) comprises the sub-modes: activated and one single package sub-mode (ACT-1) and activated and a plurality of packages sub-mode (ACT-P), wherein the control data (125a,b) comprises information to set the light emitting devices (106) in the activated and one single package sub-mode (ACT-1) or the activated and a plurality of packages sub-mode (ACT-P), wherein the activated and one single package sub-mode (ACT-1) pertains to first light settings (LS-1) and the plurality of packages sub-mode (ACT-P) pertains to second light settings (LS-2), thereby indicating whether one single package or several packages are to be picked from the cargo space (102).

9. A computer system (118) comprising a processor device (112) configured to perform the method of any one of the claims 1 to 8.

10. A vehicle (100) comprising a processor device (112) to perform the method of any one of claims 1 to 8.

11. A computer-implemented method (600) for organizing a cargo space (102) of a vehicle (100) by assigning a light emitting device (106) to a package (104) by using a computer system (118), said method comprising
reading (602) a code (400) provided on the package (104),
retrieving (604) a delivery position (126a-f) linked to the package (104),
identifying (606) the light emitting device (106) associated with the delivery position (126a-f),
transmitting (608) control data (125a,b) to the light emitting device (106), such that the light emitting device (106) is set in an activated mode (ACT), thereby allowing the light emitting device (106) to be identified such that the package (104) can be physically connected to the light emitting device (106).

12. The method according to claim 11, wherein the light emitting device (106) is mounted on a shelf (108) in the cargo space (102) such that the package (104) can be physically connected to the light emitting device (106) by placing the package (104) on the shelf (108) , wherein the shelf (108) is arranged to hold a plurality of packages (105) having identical delivery positions (126a-f) or delivery positions within a sub-cluster of the cluster (208) .

13. The method according to any one of the claims 11 or 12, wherein the activated mode (ACT) comprises the sub-modes: activated and one single package sub-mode (ACT-1) and activated and a plurality of packages sub-mode (ACT-P), wherein the control data (125a,b) comprises information to set the light emitting devices (106) in the activated and one single package sub-mode (ACT-1) or the activated and a plurality of packages sub-mode (ACT-P), wherein the activated and one single package sub-mode (ACT-1) pertains to first light settings (LS-1) and the plurality of packages sub-mode (ACT-P) pertains to second light settings (LS-2), thereby indicating whether the package (104) is to be a single package physically connected to the light emitting device (106) or to be one out several packages physically connected to the light emitting device (106).

14. A computer system comprising a processor device configured to perform the method of any one of claims 11 to 13.

15. A vehicle (100) comprising a processor device (118) to perform the method of any one of claims 11 to 13.
